# EUROPÄISCHE PATENTSCHRIFT

(11) **EP 3 128 077 B1**
(45) Veröffentlichungstag und Bekanntmachung des Hinweises auf die Patenterteilung: **15.05.2019**
(21) Anmeldenummer: 15179644.8
(22) Anmeldetag: 04.08.2015
(51) Int. Cl.: E01C 19/48

(54) **STRASSENFERTIGER UND VERFAHREN ZUR BESTIMMUNG DER BOHLENKONFIGURATION**
PAVER AND METHOD FOR DETERMINING SCREED CONFIGURATION
FINISSEUSE DE ROUTE ET MÉTHODE DE DÉTÉRMINATION DE CONFIGURATION DES POUTRES LISSEUSES

(43) Veröffentlichungstag der Anmeldung: 08.02.2017
(73) Patentinhaber: Joseph Vögele AG, 67075 Ludwigshafen (DE)
(72) Erfinder: BUSCHMANN, Martin, 67435 Neustadt (DE)
(74) Vertreter: Grünecker Patent- und Rechtsanwälte PartG mbB

(56) Entgegenhaltungen:
- EP-A1- 2 239 374
- EP-A1- 2 366 830
- EP-A1- 2 813 619
- US-A1- 2014 186 115
- US-A1- 2014 294 503

## Beschreibung

Die Erfindung bezieht sich auf ein Verfahren zur Bestimmung einer Konfiguration einer Einbaubohle eines Straßenfertigers gemäß dem Oberbegriff des Anspruchs 1 sowie auf einen Straßenfertiger gemäß dem Oberbegriff des Anspruchs 5.

Straßenfertiger sind aus der Praxis bekannt. Sie weisen häufig eine Zugmaschine auf, die eine sogenannte Einbaubohle zum Glätten und Verdichten von Straßenschichten zieht. Moderne Einbaubohlen können den jeweiligen auf der Baustelle gegebenen Bedingungen durch ein breites Spektrum an Konfigurationsmöglichkeiten angepasst werden. Aufgrund der zunehmenden Automatisierung des Betriebes von Straßenfertigern ist eine Erfassung der jeweiligen Bohlenkonfiguration durch die Maschinensteuerung von großem Interesse. Anfänglich war es üblich, die jeweilige Bohlenkonfiguration durch den Bediener des Straßenfertigers eingeben zu lassen. Da dies jedoch mühsam und zeitaufwändig ist, wurden zunehmend Methoden entwickelt, diesen Prozess zu vereinfachen.

Die EP 2 239 374 A1 offenbart einen Straßenfertiger mit einer Ausleseeinrichtung, die Identifikationseinrichtungen, die an Zusatzkomponenten des Straßenfertigers vorgesehen sind, auslesen kann. Als Zusatzkomponenten werden beispielsweise Teile von Einbaubohlen genannt. Aus der US 2014/0294503 ist ein Bohlensystem bekannt, bei dem Bestandteile der Bohle über Identifikationsmodule verfügen, die bei einer Kopplung miteinander Daten über den jeweiligen Bohlenteil austauschen und letzten Endes an eine Steuerung weitergeben können.

Bei beiden Systemen ist es erforderlich, dass an jedem angebauten Teil eine Identifikationseinrichtung vorgesehen ist. Dadurch wird entweder die Anschaffung neuer Teile mit Identifikationseinrichtungen oder aber die Nachrüstung von Identifikationseinrichtungen nötig. Außerdem kann insbesondere bei komplexen Bohlenkonfigurationen mit sehr vielen Teilen der Datenaustausch fehleranfällig sein. Ein Lösungsansatz zur Erfassung der Bohlenbreite ist aus der EP 2 813 619 A1 der Anmelderin bekannt. Dort soll die Einbaubreite der Einbaubohle zwischen sogenannten Seitenschiebern direkt gemessen werden. So kann jedoch lediglich die Bohlenbreite erfasst werden. Andere Eigenschaften der Bohlenkonfiguration sind auf diese Weise nicht zu erfassen.

Aus der US 2014 0 186115 A1 ist ein Straßenfertiger bekannt, der es erlaubt, Zustände verschiedener Aktuatoren und Betriebsparameter zu speichern und später wieder abzurufen, um den Aufwand zum initialen Einstellen des Straßenfertigers zu reduzieren.

Die EP 2 366 830 A1 offenbart einen Straßenfertiger, der es erlaubt, die Masse einer Einbaubohle als Konstante in eine Regeleinheit einzugeben.

Aufgabe der Erfindung ist es daher eine verbesserte Bestimmung der Bohlenkonfiguration bereitzustellen. Diese Aufgabe wird erfindungsgemäß gelöst durch ein Verfahren gemäß Anspruch 1 sowie einen Straßenfertiger gemäß Anspruch 5. Vorteilhafte Weiterbildungen sind in den jeweiligen Unteransprüchen angegeben.

Die Erfindung sieht ein Verfahren zur Bestimmung einer Konfiguration einer Einbaubohle aus mehreren möglichen Konfigurationen vor. Die Einbaubohle ist dabei an einem Maschinenrahmen einer Zugmaschine eines Straßenfertigers befestigt. Das erfindungsgemäße Verfahren zeichnet sich durch Ermitteln einer Masse der Einbaubohle durch ein Wiegesystem und Bestimmen der Konfiguration der Einbaubohle basierend auf der ermittelten Masse der Einbaubohle aus. Das Wiegesystem kann dabei unter anderem einen Sensor und eine Auswerteeinheit umfassen. Bei dem Sensor kann es sich um verschiedene Arten von Sensoren handeln, die Parameter messen oder erfassen, die direkt oder indirekt auf die Masse der Einbaubohle schließen lassen. Beispiele für Sensoren werden weiter unten erläutert.

Unter einer Bohlenkonfiguration bzw. einer Konfiguration ist eine Kombination aus verschiedenen Bohlenkomponenten und/oder -merkmalen zu verstehen. Beim Bestimmen der Konfiguration soll also z.B. ermittelt werden, aus welchen Komponenten die Bohle aufgebaut ist, wie z.B. Verbreiterungsteile, Hauptbohlentyp oder auch Seitenschieber, und welche Merkmale sie aufweist, z.B. Einbaubreite, Neigung oder ein Maß für die mögliche Verdichtung beispielsweise anhand der Erkennung von verbauten Verdichtungselementen, wie z.B. Vibrationselementen, Tampern oder Pressleisten.

Bei der Auswerteeinheit kann es sich z.B. um ein elektronisches Steuergerät handeln, das die durch den Sensor gemessenen Werte zur Ermittlung der Masse der Einbaubohle verwendet. Anhand der ermittelten Masse kann dann die Konfiguration der Einbaubohle aus mehreren möglichen Konfigurationen bestimmt werden. Dies kann beispielsweise durch die Auswerteeinheit des Wiegesystems ausgeführt werden. Es ist jedoch ebenso denkbar, dass die Auswerteeinheit des Wiegesystems die ermittelte Masse an andere geeignete Komponenten des Straßenfertigers übermittelt, sodass diese die Konfiguration der Einbaubohle bestimmen können. Desweiteren ist vorstellbar, dass das Wiegesystem nur die Sensoren umfasst. In diesem Fall kann das Wiegesystem ohne Auswerteeinheit vorgesehen sein. Demgemäß ist es denkbar, dass die Auswertung der Sensordaten beispielsweise durch ein elektronisches Steuergerät eines anderen Systems des Straßenfertigers erfolgen kann. Das Wiegesystem kann an dem Straßenfertiger vorhanden sein. Es ist jedoch ebenso vorstellbar, dass das Wiegesystem separat von dem Straßenfertiger vorgesehen ist, beispielsweise als separates Zusatzsystem.

Es ist denkbar, dass die ermittelte Masse der Einbaubohle mit bekannten Massen, die bekannten Bohlenkonfigurationen zugeordnet sind, verglichen wird. Dies kann zur Bestimmung der Konfiguration der Einbaubohle dienen. Dabei kann beispielsweise eine werkseitig vorgegebene Tabelle oder aber eine andere Zuordnungsform vorgegeben sein, die bekannten Bohlenkonfigurationen einen zugehörigen Massenwert einer auf diese Weise konfigurierten Einbaubohle zuordnet. Die ermittelte Masse kann dann mit den Massewerten verglichen werden, sodass der ermittelten Masse eine Bohlenkonfiguration zugeordnet werden kann. Als bekannte Massen können auch Massenbereiche vorgegeben werden, sodass die in diesen Bereich fallenden ermittelten Massen der jeweils zugehörigen Bohlenkonfiguration zugeordnet werden können. So kann auch bei Abweichungen, wie z.B. Messungenauigkeiten oder aber Ungenauigkeiten bei dem Ermitteln der Masse, eine Bestimmung der Konfiguration der Einbaubohle erfolgen.

Die Ermittlung der bekannten Masse bzw. der Massenwerte kann auf unterschiedliche Art und Weise geschehen. Zum einen ist es denkbar, dass die Nennmassen von verschiedenen Bohlenkomponenten und Anbauteilen in unterschiedlichen denkbaren Kombinationen zusammenaddiert werden, sodass sich ein Nenngewicht einer Konfiguration der Einbaubohle ergibt, die aus einer solchen Kombination der Komponenten und/oder Anbauteile besteht. Zum anderen ist es denkbar, dass verschiedene mögliche Konfigurationen tatsächlich aufgebaut werden, d.h. dass unterschiedliche Kombinationen von Bohlenkomponenten und/oder Anbauteilen montiert werden und deren Masse empirisch bestimmt wird. Sowohl empirisch bestimmte Massen als auch berechnete Nennmassen können um einen Toleranzbereich ergänzt werden, um die bereits weiter oben erwähnten Massenbereiche zu erhalten.

In einer weiteren Variante kann die ermittelte Masse der Einbaubohle mit Referenzmassen verglichen werden, die aus bekannten Massen von bekannten Bohlenkomponenten bestimmt, z.B. errechnet, werden. Diese Methode kann der Ermittlung mittels Nennmassen ähneln. Beispielsweise kann werksseitig eine Tabelle oder eine andere Zuordnungsform vorgegeben werden, die verschiedenen Bohlenkomponenten und/oder Anbauteilen ihre jeweilige Masse zuordnet. Dann kann die durch das Wiegesystem ermittelte Masse der Einbaubohle mit verschiedenen Kombinationen aus den Nennmassen verglichen werden und durch ein geeignetes Auswahlverfahren die wahrscheinlichste Konfiguration der Einbaubohle bestimmt werden. Für den Fall, dass ein- und dieselbe Masse verschiedenen Kombinationen aus Bohlenkomponenten und/oder Anbauteilen zugeordnet werden kann, kann vorgesehen sein, einem Benutzer des Straßenfertigers die endgültige Auswahl der tatsächlichen Konfiguration zu überlassen. Beispielsweise können die möglichen Konfigurationen dem Benutzer angezeigt werden, sodass er die plausibelste Konfiguration auswählen kann.

Wie bereits weiter oben erwähnt, sind verschiedene Parameter, die auf die Masse der Einbaubohle schließen lassen, vorstellbar. Beispielsweise kann die Masse der Einbaubohle basierend auf einen Druck in einer Hydraulikvorrichtung ermittelt werden, die einerseits an der Einbaubohle und andererseits an dem Straßenfertiger befestigt ist. Hierbei kann es sich beispielsweise um einen Hydraulikzylinder und insbesondere um einen sogenannten Bohlenhub- und/oder Entlastungszylinder handeln. Die Hydraulikvorrichtung kann beispielsweise einerseits mit einem Teil des Maschinenrahmens des Straßenfertigers verbunden sein und andererseits mit der Einbaubohle. Dabei ist es denkbar, dass die Verbindung mit der Einbaubohle direkt ausgeführt ist, z.B. an Strukturkomponenten der Einbaubohle. Es ist jedoch ebenso denkbar, dass die Verbindung mit der Einbaubohle indirekt ausgeführt ist, beispielsweise durch eine Verbindung der Hydraulikvorrichtung mit einer Struktur, die die Bohle ggf. beweglich an dem Straßenfertiger lagert. Hierbei sind insbesondere Zugarme denkbar, die bei Zugmaschinen von Straßenfertigern häufig genutzt werden, um die Einbaubohle zu ziehen.

Die Erfindung bezieht sich auch auf einen Straßenfertiger, der eine Zugmaschine mit einem Materialbunker und einem Maschinenrahmen umfasst, wobei an dem Maschinenrahmen eine Einbaubohle befestigt ist. Ein solcher erfindungsgemäßer Straßenfertiger zeichnet sich durch ein Wiegesystem aus, das dazu konfiguriert ist, eine Masse der Einbaubohle zu ermitteln. Wie bereits erwähnt, kann das Wiegesystem eine Auswerteeinheit und verschiedene Arten von Sensoren umfassen. Diese können entsprechend den obigen Ausführungen konfiguriert sein. Demnach kann der Straßenfertiger ggf. weitere Steuergeräte umfassen die verschiedene Funktionen des Straßenfertigers steuern und zusätzlich zu diesen Funktionen das Bestimmen der Konfiguration der Einbaubohle übernehmen können. Es ist jedoch auch denkbar, dass zur Bestimmung der Konfiguration der Einbaubohle ein separates Steuergerät vorgesehen ist, das ausschließlich diese Funktion übernimmt.

Die Wiegeeinrichtung ist dazu konfiguriert, eine Konfiguration der Einbaubohle basierend auf der ermittelten Masse der Einbaubohle zu bestimmen. Dies kann durch die Auswerteeinheit geschehen oder aber durch ein separat vorgesehenes Steuergerät. Wie bereits oben erwähnt, ist es jedoch ebenso denkbar, dass zur Bestimmung der Konfiguration der Einbaubohle ein Steuergerät herangezogen wird, das bei anderen Funktionen des Straßenfertigers eingesetzt wird.

Es ist denkbar, dass das Wiegesystem dazu konfiguriert ist, die ermittelte Masse der Einbaubohle mit bekannten Massen, die bekannten Bohlenkonfigurationen zugeordnet sind, zu vergleichen. Um Wiederholungen zu vermeiden, wird hierzu auf die vorigen Erläuterungen verwiesen.

In einer weiteren Variante kann das Wiegesystem dazu konfiguriert sein, die ermittelte Masse der Einbaubohle mit Referenzmassen zu vergleichen, die aus bekannten Massen von bekannten Bohlenkomponenten erreicht werden. Auch zu dieser Variante wird auf die obigen Ausführungen verwiesen.

Das Wiegesystem kann vorteilhafterweise an dem Straßenfertiger vorgesehen sein. Alternativ ist jedoch auch ein separat ausgeführtes Wiegesystem denkbar. Die Vorteile einer Variante am Straßenfertiger liegen z.B. in der ständigen Verfügbarkeit und der Nutzung von bereits am Straßenfertiger vorhandenen Komponenten, wie z.B. Sensoren. Eine separate Variante kann bei konventionellen Straßenfertigern als Nachrüstlösung genutzt werden. Dabei kann ein Wiegesystem z.B. für mehrere Straßenfertiger auf der gleichen Baustelle eingesetzt werden.

Es kann vorteilhaft sein, wenn das Wiegesystem einen Drucksensor umfasst, der in einer Hydraulikvorrichtung, die einerseits an der Einbaubohle und andererseits der Zugmaschine befestigt ist, vorgesehen ist, um den in der Hydraulikvorrichtung vorhandenen Druck zu ermitteln. Die Befestigung der Hydraulikvorrichtung ist dabei ebenfalls so zu verstehen, wie bereits vorhergehend erläutert.

Es ist vorstellbar, dass die Masse der Einbaubohle basierend auf dem ermittelten Druck in der Hydraulikvorrichtung ermittelt wird.

In einer weiteren Variante umfasst das Wiegesystem einen Kraftmessbolzen. Dieser kann beispielsweise an der Verbindung zwischen einer Hydraulikvorrichtung und der Zugmaschine oder der Verbindung zwischen der Einbaubohle und der Hydraulikvorrichtung vorgesehen sein. Auch dies stellt eine einfache und möglicherweise nachrüstbare Lösung für einen Sensor des Wiegesystems dar. Der Kraftmessbolzen kann beispielsweise an einer Befestigungsstelle zwischen Maschinenrahmen und Hydraulikvorrichtung oder an einer Befestigungsstelle zwischen Hydraulikvorrichtung und Einbaubohle vorgesehen sein.

In einer weiteren Variante weist das Wiegesystem einen Dehnungsmessstreifen auf.

Die Erfindung bezieht sich auf ein Verfahren sowie einen Straßenfertiger der vorstehend beschriebenen Art. Im Folgenden wird ein Ausführungsbeispiel anhand von Zeichnungen näher erläutert.
- Figur 1: zeigt einen erfindungsgemäßen Straßenfertiger, der für die Ausführung des erfindungsgemäßen Verfahrens geeignet ist.
- Figur 2: zeigt schematisch Komponenten eines Wiegesystem für einen erfindungsgemäßen Straßenfertiger.
- Figur 3: zeigt schematisch verschiedene Bohlenkonfigurationen.

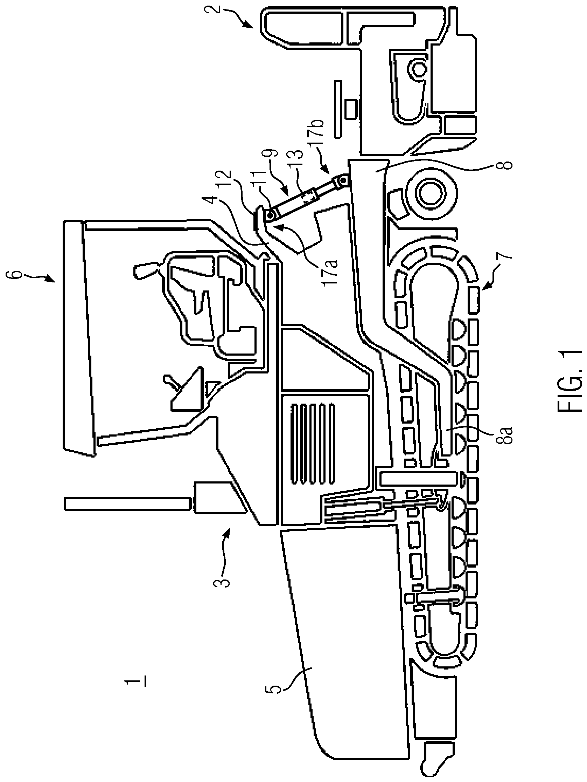

Auf Figur 1 ist ein Straßenfertiger 1 gemäß einem Ausführungsbeispiel der Erfindung dargestellt. Er umfasst eine Einbaubohle 2, die von einer Zugmaschine 3 geschleppt wird. Die Zugmaschine umfasst einen Maschinenrahmen 4. An diesem sind die wesentlichen Komponenten des Straßenfertigers 1 direkt oder indirekt befestigt. So umfasst die Zugmaschine 3 beispielsweise einen Materialbunker 5, einen Fahrer- oder Bedienstand 6 und ein Fahrwerk 7. Bei Letzerem handelt es sich im Ausführungsbeispiel um ein Kettenfahrwerk. Es ist jedoch auch ein Fahrwerk mit einzelnen Rädern denkbar. Die Einbaubohle 2 ist über einen Zugarm 8 an dem Maschinenrahmen 4 montiert. Wie bei modernen Straßenfertigern üblich, ist der Zugarm 8 an seinem Befestigungspunkt 8a schwenkbar an dem Maschinenrahmen 4 gelagert. Dies ermöglicht es, die Bohle 2 auf dem verlegten Asphalt schwimmend zu ziehen.

Zwischen dem Maschinenrahmen 4 und der Einbaubohle 2 besteht neben den Zugarmen 8 eine weitere mechanische Verbindung. Im vorliegenden Ausführungsbeispiel umfasst diese eine Hydraulikvorrichtung 9, bei der es sich um einen Hydraulikzylinder 9 handeln kann. Im vorliegenden Ausführungsbeispiel ist die mechanische Verbindung derart gestaltet, dass sie zwischen dem Maschinenrahmen 4 und dem Zugarm 8 vorgesehen ist. Es ist jedoch ebenso denkbar, dass die Verbindung direkt zwischen dem Maschinenrahmen 4 und der Einbaubohle 2 vorgesehen ist. Gemäß den Ausführungsbeispielen ist der Hydraulikzylinder 9 mit seiner Kolbenseite an dem Maschinenrahmen 4 und mit seiner Kolbenstangenseite an dem Zugarm 8 befestigt. Eine umgekehrte Konfiguration ist jedoch ebenso denkbar. Ebenfalls ist es denkbar, dass die Hydraulikvorrichtung bzw. der Hydraulikzylinder 9 einerseits mit dem Maschinenrahmen 4 und andererseits direkt mit der Einbaubohle 2 verbunden ist.

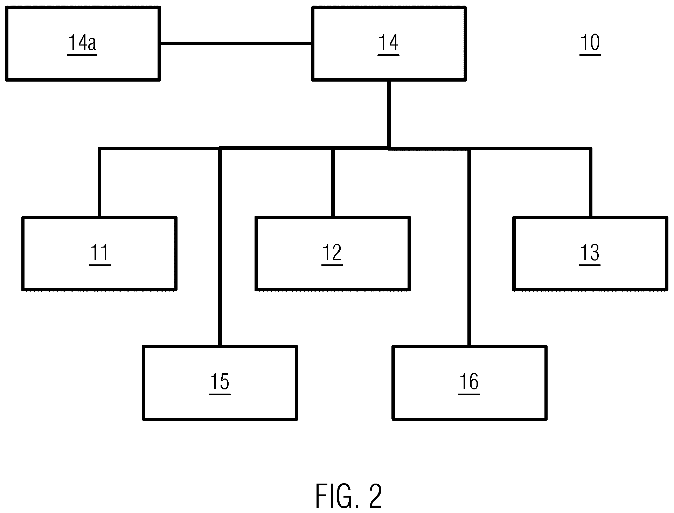

In Figur 2 sind mögliche Komponenten eines Wiegesystems 10 dargestellt, das in dem Straßenfertiger 1 vorgesehen ist. Das Wiegesystem 10 ist dazu konfiguriert, die Masse der Einbaubohle 2 zu ermitteln. Zu diesem Zweck umfasst das Wiegesystem 10 aus dem Ausführungsbeispiel einen Kraftmessbolzen 11, einen Dehnunungsmessstreifen 12 sowie einen Drucksensor 13, die im Folgenden näher erläutert werden. Der Kraftmessbolzen 11 ist im Ausführungsbeispiel an einer ersten Befestigungsstelle 17a zwischen dem Hydraulikzylinder 9 und dem Maschinenrahmen 4 vorgesehen. Er kann jedoch auch an einer zweiten Befestigungsstelle 17b zwischen dem Hydraulikzylinder 9 und dem Zugarm 8 bzw. der Einbaubohle 2 vorgesehen sein.

Im vorliegenden Ausführungsbeispiel ist der Dehnungsmessstreifen 12 an dem Maschinenrahmen 4 vorgesehen. Er ist dabei in der Nähe der ersten Befestigungsstelle 17a zwischen der Hydraulikvorrichtung 9 und den Maschinenrahmen 4 angeordnet. Es ist jedoch ebenfalls denkbar, dem Dehnungsmessstreifen 12 an einer beliebigen Stelle entlang des Kraftflusses zwischen dem Maschinenrahmen 4 und der Einbaubohle 2 anzuordnen.

Der Drucksensor 13 ist im Inneren der Hydraulikvorrichtung 9 vorgesehen. Im vorliegenden Ausführungsbeispiel befindet er sich in der Hydraulikkammer der Kolbenstangenseite des Hydraulikzylinders 9. Dort erfasst er den dort herrschenden Hydraulikdruck. Der Drucksensor 13 kann alternativ auch in der Hydraulikkammer der Kolbenseite des Hydraulikzylinders 9 vorgesehen sein.

Alle Sensoren 11, 12, 13 dienen dazu, die Kraft zu ermitteln, die von der mechanischen Verbindung zwischen dem Maschinenrahmen 4 und der Einbaubohle 2 aufgenommen wird. Dazu werden Messsignale an ein Steuergerät 14 übermittelt. Im vorliegenden Ausführungsbeispiel ist dieses Steuergerät 14 ein Bestandteil des Wiegesystems 10. Es ist jedoch ebenfalls denkbar, dass die Messsignale an ein Steuergerät 14 übermittelt werden, das an dem Straßenfertiger 1 zur Steuerung anderer Funktionen vorgesehen ist. Bei dem Steuergerät 14 kann es sich um ein elektronisches Steuergerät handeln. Bei den Messsignalen kann es sich um Sensorrohdaten handeln. Es ist jedoch ebenso denkbar, dass an den Sensoren 11, 12, 13 schon erste Verarbeitungsschritte vorgenommen werden, sodass beispielsweise Werte an das Steuergerät 14 übermittelt werden, die die Kraft angeben, die zwischen dem Maschinenrahmen 4 und der Einbaubohle 2 wirken. Dies kann in digitaler und/oder analoger Form geschehen.

Das Wiegesystem 10 gemäß dem Ausführungsbeispiel umfasst desweiteren einen Beschleunigungssensor 15 und einen Neigungssensor 16. Diese liefern ebenfalls Messsignale an das Steuergerät 14. Dadurch kann das Wiegesystem 10 bzw. das Steuergerät 14 auf eine Neigung des Straßenfertigers 1 relativ zur Senkrechten schließen. In Kombination mit den Messsignalen der Sensoren 11, 12 und 13 kann so die Masse der Einbaubohle 2 ermittelt werden.

Obwohl im vorliegenden Ausführungsbeispiel zur Bestimmung der zwischen dem Maschinenrahmen 4 und der Einbaubohle 2 wirkenden Kraft der Kraftmessbolzen 11, der Dehnungsmessstreifen 12 sowie der Drucksensor 13 vorgesehen ist, kann in anderen Ausführungsformen der Erfindung das Wiegesystem 10 nur einen oder zwei der genannten Sensoren enthalten. Ebenso ist ein beliebiger anderer Sensor zur Ermittlung der durch die mechanische Verbindung zwischen dem Maschinenrahmen 4 und der Einbaubohle 2 aufgenommenen Kräfte denkbar. Auch der Beschleunigungssensor 15 und der Neigungssensor 16 sind hier lediglich beispielhaft für einen oder mehrere beliebige Sensoren angeführt, die zur Bestimmung der Neigung des Straßenfertigers 1 zur Senkrechten geeignet sind. Es sollte klar sein, dass gemäß der Erfindung auch nur ein Beschleunigungssensor 15 oder nur ein Neigungssensor 16 vorgesehen sein kann.

Die mechanische Verbindung zwischen dem Maschinenrahmen 4 und der Einbaubohle 2 kann an mehreren Stellen vorgesehen sein. So ist es bei Straßenfertigern z.B. üblich, zwei Hydraulikzylinder 9 vorzusehen. Es ist jedoch eine beliebige Anzahl vorstellbar. In solchen Fällen können die Kräfte, die durch die mechanische Verbindung aufgenommen werden, an sämtlichen Stellen erfasst werden. Aus den so erfassten Kräften kann beispielsweise die Gewichtsverteilung der Einbaubohle 2 ermittelt werden. Es ist außerdem vorstellbar, dass auf Basis dieser Gewichtsverteilung auf die Neigung der Einbaubohle 2 relativ zur Zugmaschine 3 geschlossen werden kann.

Auf Basis der ermittelten durch die mechanische Verbindung aufgenommenen Kraft sowie weiterer bekannter Parameter wie z.B. der ermittelten Neigung des Straßenfertigers sowie dem Gewicht des Zugarms 8, der Länge des Zugarms 8 und/oder des Aufhängungspunktes des Zugarms 8, kann die Masse der Einbaubohle 2 ermittelt werden.

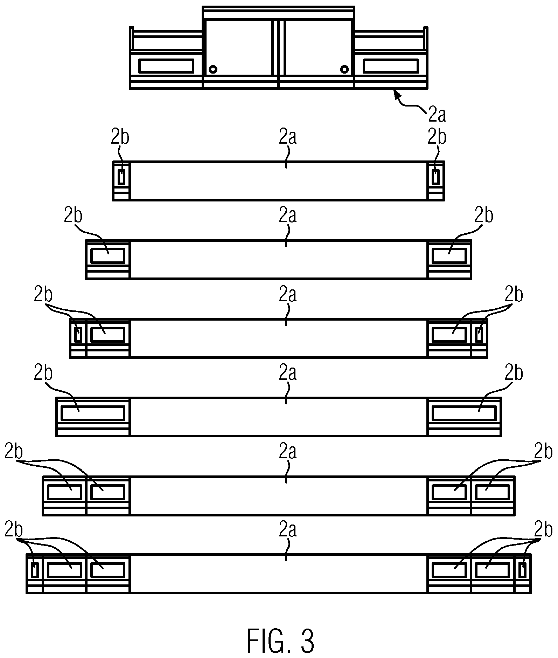

Die Masse der Einbaubohle 2 dient dann als Basis für die Bestimmung der Konfiguration der Einbaubohle 2. In Figur 3 sind beispielhaft sieben verschiedene Bohlenkonfigurationen schematisch dargestellt. Sie enthalten unterschiedliche, zum Teil mehrere Bohlenkomponenten 2a, 2b. In Figur 3 ist beispielsweise eine Ausziehbohle 2a als Hauptkomponente 2a vorgesehen. Sie ist an der Zugmaschine 3 montiert. An der Hauptkomponente 2a können mehrere unterschiedliche Zusatzkomponenten 2b angebracht werden, z.B. starre Verlängerungsteile mit jeweils fester Länge. Dies kann z. B. wie in Figur 3 zur Vergrößerung der Einbaubreite der Einbaubohle 2 dienen.

Es sollte jedoch klar sein, dass in der Praxis eine beliebige Anzahl unterschiedlichster Konfigurationen für die Einbaubohle 2 denkbar sind. In Tabelle 1 ist eine beispielhafte Zuordnung verschiedener Massenwerte zu entsprechenden Einbaubreiten angegeben, wie sie beispielsweise für die in Figur 3 dargestellten Bohlenkonfigurationen vorgesehen sein kann.

Ergibt die oben erwähnte Ermittlung der Bohlenmasse beispielsweise eine Masse von 5500kg, kann daraus geschlossen werden, dass die Breite der Bohle 7,5 m beträgt. Es ist jedoch vorstellbar, dass neben der oder alternativ zur Einbaubohlenbreite weitere Konfigurationsmerkmale bestimmt werden können. So ist es denkbar, dass die Ausstattung der Bohle 2 mit Vibrationseinrichtungen, sogenannten Tampern oder Pressleisten, bestimmt werden kann. Hierzu ist jedoch unter Umständen eine sehr genaue Massenbestimmung und/oder ein aufwendiges Zuordnungsverfahren notwendig.

**Tabelle 1**

| Einbaubreite [m] | Masse[kg] |
|---|---|
| 5,0 | 3.500 |
| 5,5 | 4.000 |
| 6,5 | 4.500 |
| 7,0 | 5.000 |
| 7,5 | 5.500 |
| 8,0 | 6.000 |
| 8,5 | 6.500 |

Eine Zuordnung von Massenwerten zu entsprechenden Bohlenkonfigurationen, wie sie beispielhaft in Tabelle 1 angegeben ist, kann bevorzugt auf einem elektronischen Speichermedium 14a gespeichert sein. Dieses kann fest in dem Straßenfertiger 1 installiert oder durch einen Benutzer entnehmbar ausgeführt sein.

In jedem Fall ist es denkbar, dass die Zuordnung durch den Benutzer veränderbar ist, sodass die Auswahl der Bohlenkonfigurationen gegebenenfalls reduziert werden kann, z. B. auf diejenigen Konfigurationen, die von dem Benutzer tatsächlich verwendet werden. Es ist vorstellbar, dass auch die Massenwerte bzw. Massenbereiche veränderbar sind. Auf diese Weise können z. B. die Massenbereiche vergrößert und die Anzahl der möglichen Bohlenkonfigurationen reduziert werden. Dies kann die Erkennungsgenauigkeit und/oder -geschwindigkeit erhöhen. Es ist darüber hinaus vorstellbar, dass die Zuordnung werksseitig vorgesehen ist. Es kann eine nach Kundenwünschen angepasste Zuordnung vorgesehen sein oder eine, die sämtliche mögliche Bohlenkonfigurationen und entsprechende Massenwerte bzw. Massenbereiche umfasst.

In einer eingangs beschriebenen zweiten Zuordnungsvariante, in der die ermittelte Masse mit Referenzmassen verglichen wird, die z. B. durch das Wiegesystem 10 aus bekannten Massen von bekannten Bohlenkomponenten 2a, 2b errechnet werden, kann eine Zuordnung von Konfigurationsmerkmalen der Bohlenkomponenten 2a, 2b zu entsprechenden bekannten Massenwerten vorgesehen sein. Wie bereits erwähnt, ist eine Vielzahl von enthaltenen Konfigurationsmerkmalen vorstellbar, z. B. die Ausstattung der Bohlenkomponenten 2a, 2b mit Vibrationseinrichtungen, sogenannten Tampern oder Pressleisten, oder die Einbaubreite. Die Zuordnung kann ebenfalls auf einem elektronischen Speichermedium 14a gespeichert sein, welches ebenfalls fest in dem Straßenfertiger 1 installiert oder durch einen Benutzer entnehmbar ausgeführt sein kann.

Auch die zweite Zuordnungsvariante kann durch den Benutzer veränderbar ausgeführt sein. In diesem Fall ist es zusätzlich zu den vorstehend im Zusammenhang mit der ersten Zuordnungsvariante beschriebenen Veränderungsmöglichkeiten denkbar, dass die Auswahl an Bohlenkomponenten 2a, 2b, aus denen die Referenzmassen errechnet werden, reduziert oder erweitert wird, z. B. auf die tatsächlich für den Benutzer verfügbaren Bohlenkomponenten 2a, 2b.

## Patentansprüche

1. Verfahren zur Bestimmung einer Konfiguration einer Einbaubohle (2) aus mehreren möglichen Konfigurationen, wobei die Einbaubohle (2) an einem Maschinenrahmen (4) einer Zugmaschine (3) eines Straßenfertigers (1) befestigt ist, **gekennzeichnet durch:**
Ermitteln einer Masse der Einbaubohle (2) durch ein Wiegesystem (10) und
Bestimmen der Konfiguration der Einbaubohle (2) basierend auf der ermittelten Masse der Einbaubohle (2).

2. Verfahren nach Anspruch 1, **dadurch gekennzeichnet, dass** die ermittelte Masse der Einbaubohle (2) mit bekannten Massen, die bekannten Bohlenkonfigurationen zugeordnet sind, verglichen wird.

3. Verfahren nach Anspruch 1, **dadurch gekennzeichnet, dass** die Masse der Einbaubohle (2) basierend auf einem Druck in einer Hydraulikvorrichtung (9) ermittelt wird, die einerseits an der Einbaubohle (2) und andererseits an der Zugmaschine (3) befestigt ist.

4. Verfahren nach einem der vorangehenden Ansprüche, **dadurch gekennzeichnet, dass** die ermittelte Masse der Einbaubohle (2) mit Referenzmassen verglichen wird, die aus bekannten Massen von bekannten Bohlenkomponenten (2a, 2b) bestimmt werden.

5. Straßenfertiger (1), umfassend: eine Zugmaschine (3) mit einem Materialbunker (5) und einem Maschinenrahmen (4), wobei an dem Maschinenrahmen (4) eine Einbaubohle (2) befestigt ist, **gekennzeichnet durch** ein Wiegesystem (10), das dazu konfiguriert ist, eine Masse der Einbaubohle (2) zu ermitteln und eine Konfiguration der Einbaubohle (2) basierend auf der ermittelten Masse der Einbaubohle (2) zu bestimmen.

6. Straßenfertiger nach Anspruch 5, **dadurch gekennzeichnet, dass** das Wiegesystem (10) dazu konfiguriert ist, die ermittelte Masse der Einbaubohle (2) mit bekannten Massen, die bekannten Bohlenkonfigurationen zugeordnet sind, zu vergleichen.

7. Straßenfertiger nach einem der Ansprüche 5 bis 6, **dadurch gekennzeichnet, dass** das Wiegesystem (10) dazu konfiguriert ist, die ermittelte Masse der Einbaubohle (2) mit Referenzmassen zu vergleichen, die aus bekannten Massen von bekannten Bohlenkomponenten (2a, 2b) errechnet werden.

8. Straßenfertiger nach einem der Ansprüche 5 bis 7, **dadurch gekennzeichnet, dass** das Wiegesystem (10) an dem Straßenfertiger (1) vorgesehen ist.

9. Straßenfertiger nach einem der Ansprüche 5 bis 8, **dadurch gekennzeichnet, dass** das Wiegesystem (10) einen Drucksensor (13) umfasst, der in einer Hydraulikvorrichtung (9), die einerseits an der Einbaubohle (2) und andererseits an der Zugmaschine (3) befestigt ist, vorgesehen ist, um den in der Hydraulikvorrichtung (9) vorhandenen Druck zu ermitteln.

10. Straßenfertiger nach Anspruch 9, **dadurch gekennzeichnet, dass** die Masse der Einbaubohle (2) basierend auf dem ermittelten Druck in der Hydraulikvorrichtung (9) ermittelt wird.

11. Straßenfertiger nach einem der Ansprüche 5 bis 9, **dadurch gekennzeichnet, dass** das Wiegesystem (10) einen Kraftmessbolzen (11) umfasst.

12. Straßenfertiger nach Anspruch 11, **dadurch gekennzeichnet, dass** der Kraftmessbolzen (11) an einer Befestigungsstelle (17a) zwischen Maschinenrahmen (4) und Hydraulikvorrichtung () oder an einer Befestigungsstelle (17b) zwischen Hydraulikvorrichtung (9) und Einbaubohle (2) vorgesehen ist.

13. Straßenfertiger nach einem der Ansprüche 5 bis 12, **dadurch gekennzeichnet, dass** das Wiegesystem (10) einen Dehnungsmessstreifen (12) aufweist.

## Claims

1. Method for determining a configuration of a paving screed (2) out of several possible configurations, wherein the paving screed (2) is fastened on a machine frame (4) of a tractor (3) of a road paver (1), **characterized by:**
detecting a mass of the paving screed (2) by a weighing system (10) and determining the configuration of the paving screed (2) based on the detected mass of the paving screed (2).

2. Method according the Claim 1, **characterized in that** the detected mass of the paving screed (2) is compared to known masses that are assigned to known screed configurations.

3. Method according to Claim 1, **characterized in that** the mass of the paving screed (2) is detected on the basis of a pressure in a hydraulic device (9) that is fastened on the paving screed (2) on one side and on the tractor (3) on the other side.

4. Method according to one of the preceding claims, **characterized in that** the detected mass of the paving screed (2) is compared to reference masses that are computed out of known masses of known screed components (2a, 2b).

5. Road paver (1) comprising: a tractor (3) with a material hopper (5) and a machine frame (4), wherein a paving screed (2) is fastened on the machine frame (4), **characterized by** a weighing system (10) that is configured to detect a mass of the paving screed (2) and to determine a configuration of the paving screed (2) based on the detected mass of the paving screed (2).

6. Road paver according to Claim 5, **characterized in that** the weighing system (10) is configured to compare the detected mass of the paving screed (2) to known masses that are assigned to known screed configurations.

7. Road paver according to one of the Claims 5 to 6, **characterized in that** the weighing system (10) is configured to compare the detected mass of the paving screed (2) to reference masses that are computed out of known masses of known screed components (2a, 2b).

8. Road paver according to one of the Claims 5 to 7, **characterized in that** the weighing system (10) is provided on the road paver (1).

9. Road paver according to one of the Claims 5 to 8, **characterized in that** the weighing system (10) comprises a pressure sensor (13) that is provided in a hydraulic device (9) that is fastened on the paving screed (2) on one side and on the tractor (3) on the other side in order to determine the pressure that exists in the hydraulic device (9).

10. Road paver according to Claim 9, **characterized in that** the mass of the paving screed (2) is determined based on the determined pressure in the hydraulic device (9).

11. Road paver according to one of the Claims 5 to 9, **characterized in that** the weighing system (10) comprises a force measuring bolt (11).

12. Road paver according to Claim 11, **characterized in that** the force measuring bolt (11) is provided on a fastening location (17a) between the machine frame (4) and the hydraulic device (9) or on a fastening location (17b) between the hydraulic device (9) and the paving screed (2).

13. Road paver according to one of the Claims 5 to 12, **characterized in that** the weighing system (10) has a strain measuring strip (12).

## Revendications

1. Procédé destiné à déterminer une configuration d'une table lisseuse de pose de revêtement (2) parmi plusieurs configurations possibles, la table lisseuse de pose de revêtement (2) étant fixée sur un châssis de machine (4) d'une machine de traction (3) d'un finisseur de route (1), **caractérisé par** :
la détermination d'une masse de la table lisseuse de pose de revêtement (2), par un système de pesée (10), et
la détermination de la configuration de la table lisseuse de pose de revêtement (2) en se basant sur la masse de la table lisseuse de pose de revêtement (2), ayant été déterminée.

2. Procédé selon la revendication 1, **caractérisé en ce que** la masse de la table lisseuse de pose de revêtement (2), ayant été déterminée, est comparée à des masses connues, qui sont associées à des configurations de table lisseuse connues.

3. Procédé selon la revendication 1, **caractérisé en ce que** la masse de la table lisseuse de pose de revêtement (2) est déterminée en se basant sur une pression dans un dispositif hydraulique (9), qui est fixé d'une part à la table lisseuse de pose de revêtement (2) et d'autre part à la machine de traction (3) .

4. Procédé selon l'une des revendications précédentes, **caractérisé en ce que** la masse de la table lisseuse de pose de revêtement (2), ayant été déterminée, est comparée à des masses de référence définies à partir de masses connues de composants de table lisseuse (2a, 2b) connus.

5. Finisseur de route (1) comprenant une machine de traction (3) avec une trémie à matériaux (5) et un châssis de machine (4), une table lisseuse de pose de revêtement (2) étant fixée au châssis de machine (4), **caractérisé par** un système de pesée (10), qui est configuré pour déterminer une masse de la table lisseuse de pose de revêtement (2), et pour déterminer une configuration de la table lisseuse de pose de revêtement (2) se basant sur la masse de la table lisseuse de pose de revêtement (2), ayant été déterminée.

6. Finisseur de route selon la revendication 5, **caractérisé en ce que** le système de pesée (10) est configuré pour comparer la masse de la table lisseuse de pose de revêtement (2), ayant été déterminée, à des masses connues, qui sont associées à des configurations de table lisseuse connues.

7. Finisseur de route selon l'une des revendications 5 à 6, **caractérisé en ce que** le système de pesée (10) est configuré pour comparer la masse de la table lisseuse de pose de revêtement (2), ayant été déterminée, à des masses de référence, qui sont calculées à partir de masses connues de composants de table lisseuse (2a, 2b) connus.

8. Finisseur de route selon l'une des revendications 5 à 7, **caractérisé en ce que** le système de pesée (10) est prévu sur le finisseur de route (1).

9. Finisseur de route selon l'une des revendications 5 à 8, **caractérisé en ce que** le système de pesée (10) comprend un capteur de pression (13), qui est prévu dans un dispositif hydraulique (9), qui est fixé d'une part à la table lisseuse de pose de revêtement (2) et d'autre part à la machine de traction (3), pour déterminer la pression existant dans le dispositif hydraulique (9).

10. Finisseur de route selon la revendication 9, **caractérisé en ce que** la masse de la table lisseuse de pose de revêtement (2) est déterminée en se basant sur la pression ayant été déterminée dans le dispositif hydraulique (9).

11. Finisseur de route selon l'une des revendications 5 à 9, **caractérisé en ce que** le système de pesée (10) comprend une broche dynamométrique (11).

12. Finisseur de route selon la revendication 11, **caractérisé en ce que** la broche dynamométrique (11) est prévue au niveau d'un point de fixation (17a) entre le châssis de machine (4) et le dispositif hydraulique (9), ou bien au niveau d'un point de fixation (17b) entre le dispositif hydraulique (9) et la table lisseuse de pose de revêtement (2).

13. Finisseur de route selon l'une des revendications 5 à 12, **caractérisé en ce que** le système de pesée (10) comprend une jauge extensométrique de déformation (12).
